(19) Europäisches Patentamt / European Patent Office / Office européen des brevets

(11) **EP 3 252 459 A1**

(12) **DEMANDE DE BREVET EUROPEEN**

(43) Date de publication:
06.12.2017 Bulletin 2017/49

(51) Int Cl.:
**G01N 27/20** *(2006.01)*

(21) Numéro de dépôt: **17173812.3**

(22) Date de dépôt: **31.05.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **31.05.2016 FR 1654905**

(71) Demandeur: **Commissariat à l'Energie Atomique et aux Energies Alternatives
75015 Paris (FR)**

(72) Inventeurs:
• **COUSTIER, Fabrice**
**73000 CHAMBERY (FR)**
• **JERONIMO, Pedro**
**38260 LA COTE SAINT-ANDRE (FR)**

(74) Mandataire: **Novaimo
ActiTech 8
60 avenue Marie Curie
Archamps Technopole
74166 Saint Julien-en-Genevois Cedex (FR)**

(54) **SYSTÈME ET PROCÉDÉ DE CARACTÉRISATION D'UNE FISSURE GÉNÉRÉE DANS UN SUBSTRAT SOUMIS À UNE SOLLICITATION MÉCANIQUE**

(57) Le système de caractérisation comprend un substrat (1) portant, sur au moins une première face ($F_A$), des lignes conductrices (4A) non sécantes entre elles, un dispositif d'acquisition de mesures destiné à alimenter électriquement chacune des lignes conductrices, l'une après l'autre et en boucle, et à mesurer une grandeur électrique pour chacune des lignes conductrices successivement alimentées avec une fréquence d'acquisition suffisante pour détecter la propagation d'une fissure d'une ligne à l'autre, et un module de traitement (6) destiné à déterminer au moins une information de caractérisation de la fissure à partir des mesures, du groupe comportant une origine de la fissure, une vitesse de propagation de la fissure et un trajet de propagation de la fissure.

FIG. 3

## Description

### Domaine technique de l'invention

L'invention concerne un système et un procédé de caractérisation d'une fissure générée dans un substrat, par exemple une plaquette ou « wafer » ou une cellule solaire en cours de réalisation, soumis à une sollicitation mécanique, par exemple lors d'un essai mécanique tel qu'un essai de flexion quatre points.

### État de la technique

La fabrication d'un panneau ou module photovoltaïque comporte une succession d'étapes :

- réalisation d'un lingot de silicium par cristallisation ;
- découpe du lingot en briques ;
- découpe des briques en plaquettes, ou « wafers », ayant généralement une épaisseur comprise entre 100 et 200 micromètres, une forme carrée de l'ordre d'une quinzaine de centimètres de côté et un poids de l'ordre d'une dizaine de grammes ;
- transformation des plaquettes en cellules solaires, c'est-à-dire en photopiles, par application d'une succession de traitements (dopages, sérigraphie, traitement thermique, dépôt, etc.) ;
- regroupement et encapsulation des cellules solaires en un module photovoltaïque, encore appelé panneau solaire.

Pour réaliser ces différentes étapes, les fabricants de cellules solaires et/ou de modules photovoltaïques utilisent des chaînes de fabrication intégrées, c'est-à-dire des lignes de production presque entièrement automatisées. Ces chaînes intègrent par exemple différents types de convoyeurs (à bande, à rouleaux, en godets, etc.), des préhenseurs (à effet Bernoulli, par aspiration, etc.), des systèmes de stockage (en godets, en paniers, dans des buffers, etc.), des systèmes de retournement, etc. Ainsi, lors de la réalisation des multiples opérations précitées, les substrats - c'est-à-dire les plaquettes et les cellules solaires en cours de réalisation ou réalisées - sont soumis à de nombreuses actions de manipulation, de transport et de traitement qui induisent de multiples sollicitations mécaniques, qui peuvent être dynamiques, par exemple par choc, vibration et/ou accélération, ou statiques, par exemple par flexion. Ces sollicitations mécaniques provoquent l'endommagement et/ou la rupture d'un nombre important de substrats manipulés, du fait notamment de la faible épaisseur des substrats, de l'importante cadence de production des chaînes de fabrication et de l'automatisation croissante de ces chaînes de fabrication.

Afin de contrôler la qualité d'un substrat (plaquette ou cellule solaire en cours de réalisation ou réalisée), il existe différentes techniques de mesure ou de caractérisation des propriétés mécaniques du substrat.

Par exemple, une technique courante utilise un essai de flexion quatre points. Cet essai utilise par exemple quatre barres de chargement parallèles dont deux barres supérieures (c'est-à-dire placées au-dessus du substrat à tester) et deux barres inférieures (c'est-à-dire placées au-dessous du substrat à tester), l'écartement entre les barres supérieures étant moindre que celui entre les barres inférieures. Lors de l'essai, les deux barres supérieures descendent à vitesse constante de manière à provoquer une flexion du substrat, la contrainte mécanique appliquée augmentant jusqu'à aboutir à une rupture du substrat. Cette rupture du substrat, conduisant le plus souvent à une destruction importante du substrat, est généralement provoquée par une fissure qui part d'un point défectueux du substrat et se propage très rapidement dans le substrat.

Les techniques connues de caractérisation des substrats permettent au mieux de caractériser la résistance mécanique du substrat soumis à des sollicitations mécaniques. Or, il serait utile de caractériser une fissure générée dans le substrat, notamment de connaître de façon plus précise son point de départ et/ou sa vitesse de propagation et/ou son trajet.

La présente invention vient améliorer la situation.

### Objet de l'invention

A cet effet, l'invention concerne un système de caractérisation d'une fissure générée dans un substrat soumis à une sollicitation mécanique, comprenant un substrat portant, sur au moins une première face, des lignes conductrices non sécantes entre elles, un dispositif d'acquisition de mesures destiné à alimenter électriquement chacune des lignes conductrices, l'une après l'autre et en boucle, et à mesurer une grandeur électrique pour chacune des lignes conductrices successivement alimentées avec une fréquence d'acquisition suffisante pour détecter la propagation d'une fissure d'une ligne à l'autre, et un module de traitement destiné à déterminer au moins une information de caractérisation de la fissure à partir des mesures, du groupe comportant une origine de la fissure, une vitesse de propagation de la fissure et un trajet de propagation de la fissure.

La fréquence d'acquisition peut être supérieure ou égale à une fréquence minimale telle que

$$f = V / d$$

avec :

V : la vitesse de propagation théorique maximale d'une fissure dans le substrat ;
d : la distance entre deux lignes conductrices voisines ou adjacentes.

De préférence, la fréquence d'acquisition est supérieure ou égale à deux fois, voire supérieure ou égale à trois fois la fréquence minimale.

Dans une forme de réalisation particulière, le substrat porte, sur une deuxième face, des lignes conductrices non sécantes entre elles, les lignes conductrices de la première face et les lignes conductrices de la deuxième face formant un maillage couvrant au moins partiellement le substrat, avantageusement la totalité du substrat.

L'invention permet de localiser l'origine d'une fissure ou fracture et/ou de suivre sa trajectoire et/ou de déterminer sa vitesse de propagation dans un substrat en matériau semi-conducteur, par exemple une plaquette ou wafer ou une cellule solaire en cours de réalisation (ou éventuellement réalisée). Cette fissure ou fracture peut par exemple être générée lors d'un essai mécanique de flexion quatre points.

Avantageusement, la fréquence d'acquisition est supérieure ou égale à 1 MHz.

Le système peut comprendre les caractéristiques additionnelles suivantes :

- les lignes conductrices portées par une même face du substrat sont parallèles entre elles ;
- les lignes conductrices portées par une même face du substrat sont droites ;
- les lignes conductrices de la première face sont orthogonales aux lignes conductrices de la deuxième face.

Avantageusement, le dispositif d'acquisition comporte au moins un multiplexeur interposé entre un module d'alimentation électrique et les lignes conductrices, avantageusement un premier multiplexeur entre le dispositif d'alimentation électrique et les lignes de la première face et un deuxième multiplexeur entre le dispositif d'alimentation électrique et les lignes de la deuxième face.

Avantageusement encore, le dispositif d'acquisition comporte un instrument de mesure de ladite grandeur électrique et au moins un démultiplexeur entre les lignes conductrices et l'instrument de mesure, avantageusement un premier démultiplexeur entre les lignes conductrices de la première face et l'instrument de mesure et un deuxième démultiplexeur entre les lignes conductrices de la deuxième face et l'instrument de mesure.

L'utilisation de multiplexeur(s) permet d'alimenter électriquement toutes les lignes avec une seule alimentation électrique. De façon analogue, l'utilisation de démultiplexeur(s) permet de mesurer la grandeur électrique (tension ou courant) à l'aide d'un unique dispositif ou instrument de mesure.

La distance séparant deux lignes conductrices voisines d'une même face peut être comprise entre 1 mm et 15 mm, avantageusement entre 2 mm et 10 mm.

Le substrat peut comprendre l'un au moins des matériaux du groupe comportant un matériau semi-conducteur, un matériau isolant, un matériau fragile, un matériau semi-fragile.

L'invention concerne aussi un substrat spécifiquement destiné à être utilisé par le système de caractérisation tel qu'il vient d'être défini, comportant au moins une première face portant des lignes conductrices non sécantes entre elles, chaque ligne conductrice comportant, à l'une de ses extrémités, un connecteur de liaison à un dispositif d'alimentation électrique et, à son autre extrémité, un connecteur de liaison à un dispositif de mesure d'une grandeur électrique.

Avantageusement, le substrat porte, sur une deuxième face, des lignes conductrices non sécantes entre elles, les lignes conductrices de la première face et les lignes conductrices de la deuxième face formant un maillage couvrant au moins partiellement le substrat, avantageusement la totalité du substrat.

Le substrat peut comprendre tout ou partie des caractéristiques additionnelles suivantes :

- les lignes conductrices portées par une même face du substrat sont parallèles ;
- les lignes conductrices portées par une même face du substrat sont droites
- les lignes conductrices de la première face sont orthogonales aux lignes conductrices de la deuxième face ;
- la distance séparant deux lignes voisines d'une même face est comprise entre 1 mm et 15 mm, avantageusement entre 2 mm et 10 mm;
- il comprend l'un au moins des matériaux du groupe comportant un matériau semi-conducteur, un matériau isolant, un matériau fragile, un matériau semi-fragile.

L'invention concerne encore un procédé de caractérisation d'une fissure générée dans un substrat soumis à une sollicitation mécanique, comprenant les étapes de :

- se munir d'un substrat de test portant, sur au moins une première face, des lignes conductrices non sécantes entre elles,
- acquérir des mesures en alimentant électriquement chacune des lignes conductrices, l'une après l'autre et en boucle, et en mesurant une grandeur électrique dans chacune des lignes conductrices successivement alimentées, avec une fréquence d'acquisition supérieure ou égale à une fréquence minimale fonction d'une vitesse théorique maximale de propagation d'une fissure et d'une distance entre lignes conductrices voisines ;
- déterminer au moins une information de caractérisation de la fissure à partir des mesures, notamment au moins l'une des informations du groupe comportant une origine de la fissure, une vitesse de propagation de la fissure et un trajet de propagation de la fissure.

Avantageusement, la fréquence d'acquisition est supérieure ou égale à 1 MHz.

De préférence, la fréquence minimale est telle que

$$f = V / d$$

avec :

V : la vitesse de propagation théorique maximale d'une fissure dans le substrat ;

d : la distance entre deux lignes conductrices voisines ou adjacentes.

**Description sommaire des dessins**

L'invention sera mieux comprise à l'aide de la description suivante d'une forme de réalisation particulière du système de caractérisation de l'invention et d'un mode de réalisation particulier du procédé de caractérisation de l'invention, en référence aux dessins annexés sur lesquels :

- La figure 1 représente un schéma simplifié d'un essai de flexion quatre points réalisé sur un substrat de test en matériau semi-conducteur, par exemple une plaquette de silicium ;
- Les figures 2A et 2B représentent respectivement une première face et une deuxième face du substrat de test ;
- La figure 3 représente un premier schéma du système de caractérisation, selon une forme de réalisation particulière de l'invention ;

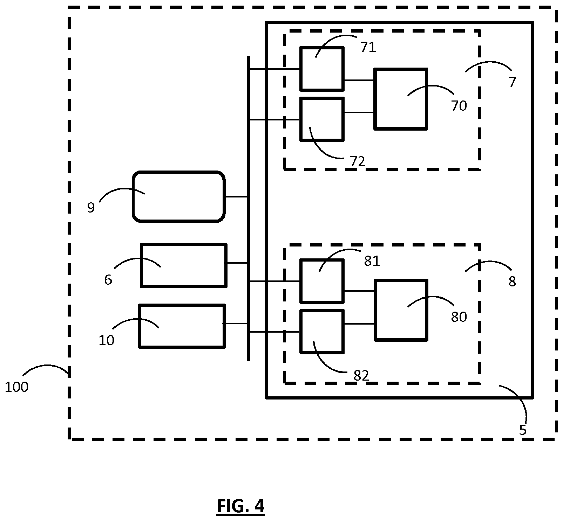

- La figure 4 représente un deuxième schéma, sous forme de blocs fonctionnels, du système de caractérisation de la figure 3 ;
- Les figures 5 à 13 représentent, à titre d'exemple illustratif, une fissure se propageant dans une plaquette de test, des mesures réalisées lors de la propagation de cette fissure des deux côtés de la plaquette et une représentation de la plaquette de test et de la fissure telle que déterminée à partir de ces mesures par un module de traitement du système de caractérisation de la figure 1.

**Description détaillée de modes de réalisation particuliers de l'invention**

Le système 100 de l'invention est destiné à caractériser une fissure générée dans un substrat en matériau semi-conducteur soumis à une sollicitation mécanique. Par exemple le substrat est soumis à un essai mécanique tel qu'un essai de flexion quatre points, jusqu'à provoquer l'apparition d'une fissure et la rupture du substrat.

La caractérisation d'une fissure vise à déterminer des informations relatives à cette fissure telles que l'origine de la fissure, la vitesse de propagation de la fissure et/ou le trajet de propagation de la fissure.

Par le terme « substrat », on entend désigner un élément ou support plat, ou mince, pouvant avoir la forme d'une plaque ou plaquette ou tranche. Par exemple, le substrat est une plaquette ou « wafer » en matériau semi-conducteur ou une cellule solaire, en cours de réalisation (ou éventuellement réalisée), issue d'une telle plaquette, ou tout autre support de ce type. En toute hypothèse, le substrat est susceptible de se fissurer lorsqu'il est soumis à une sollicitation mécanique. Il est réalisé en l'un au moins des matériaux du groupe comportant un matériau semi-conducteur, un matériau isolant, un matériau fragile, un matériau semi-fragile en matériau semi-conducteur. Le substrat n'est avantageusement pas en matériau conducteur.

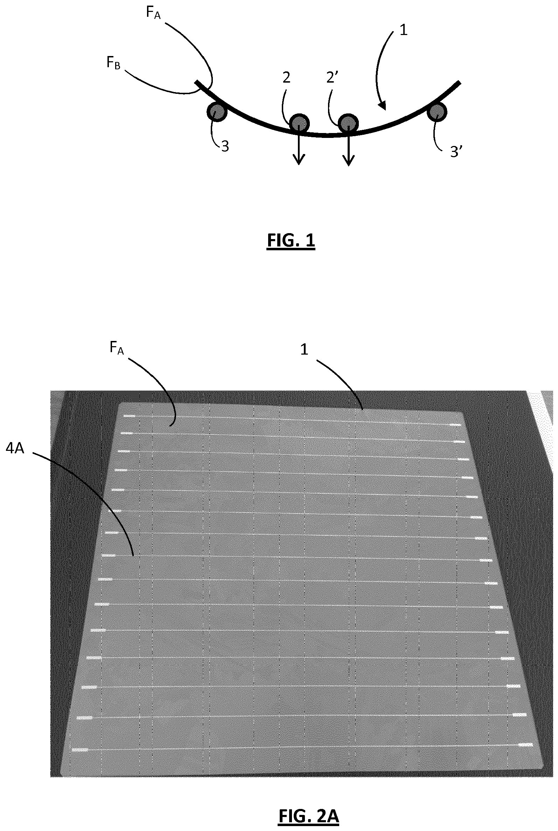

En référence à la figure 1, un essai de flexion quatre points d'un substrat, par exemple une plaquette 1 en silicium cristallin (monocristallin ou multicristallin), utilise quatre barres de chargement parallèles dont deux barres supérieures 2, 2' (c'est-à-dire placées au-dessus de la plaquette 1 à tester) mobiles et deux barres inférieures 3, 3' (c'est-à-dire placées au-dessous de la plaquette 1 à tester) fixes, l'écartement entre les barres supérieures 2, 2' étant moindre que celui entre les barres inférieures 3, 3'. Lors de l'essai, les deux barres supérieures 2, 2' descendent à vitesse constante de manière à provoquer une flexion de la plaquette 1. La contrainte mécanique ainsi appliquée augmente jusqu'à générer une fissure dans la plaquette 1 qui conduit à la rupture de celle-ci.

Le système de caractérisation 100 comporte :

- un substrat de test 1 ;
- un dispositif 5 d'acquisition de mesures ;
- un module de traitement 6 destiné à déterminer au moins une information de caractérisation de la fissure à partir des mesures.

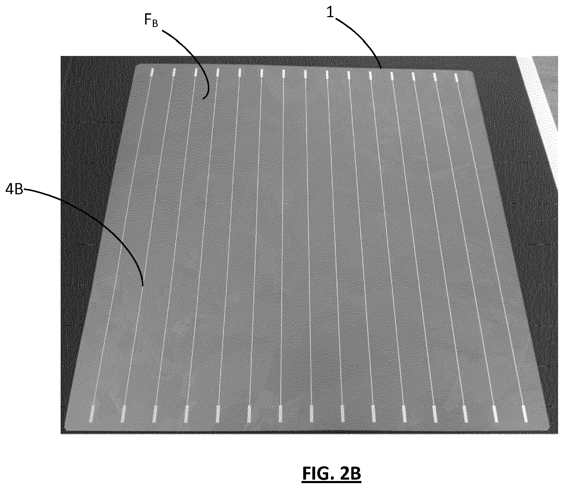

Le substrat de test 1 peut être une plaquette (ou « wafer ») en matériau semi-conducteur, par exemple en silicium, ou une cellule solaire en cours de réalisation (ou éventuellement réalisée), obtenue à partir d'une telle plaquette, ou tout autre type de support de ce type. Le substrat de test 1 comporte deux faces $F_A$ et $F_B$, respectivement supérieure et inférieure et porte des lignes conductrices sur ses deux faces $F_A$ et $F_B$, en référence à la figure 1. La première face $F_A$ porte des premières lignes conductrices 4A non sécantes entre elles, espacées l'une de l'autre, et la deuxième face $F_B$ porte des deuxièmes lignes conductrices 4B non sécantes entre elles, espacées l'une de l'autre. Sur les figures 2A et 2B, on a représenté un exemple de réalisation des deux faces $F_A$ et $F_B$ d'une plaquette de test 1.

Chaque ligne conductrice 4A ou 4B comporte, à l'une de ses extrémités, un connecteur ou plot de liaison à un dispositif d'alimentation électrique 7 et, à son autre extrémité, un connecteur ou plot de liaison à un dispositif 8 de mesure d'une grandeur électrique.

La réalisation du substrat de test 1 comprend les étapes suivantes :

- se munir d'un substrat de test 1 (plaquette ou bien cellule solaire en cours de réalisation) par exemple l'une quelconque des plaquettes fabriquées par une chaîne de fabrication de plaquettes ou l'une des cellules solaires fabriquées par une chaîne de fabrication de cellules solaires, la cellule solaire de test étant prélevée soit en cours, soit en fin de chaîne de fabrication ;
- réaliser les premières lignes conductrices 4A sur la première face $F_A$ du substrat de test 1, avec leurs connecteurs d'extrémité ;
- réaliser les deuxièmes lignes conductrices 4B sur la deuxième face $F_B$ du substrat de test 1, avec leurs connecteurs d'extrémité.

Les lignes conductrices 4A et 4B peuvent être sérigraphiées. La réalisation de lignes 4A (ou 4B) sérigraphiées s'effectue par dépôt d'une encre de sérigraphie à travers un masque puis recuit.

L'encre de sérigraphie est une encre conductrice, à base d'argent, d'aluminium, de cuivre et/ou d'un autre métal. Par exemple, l'encre contient entre 75% et 80% en poids d'argent, entre 3 et 4% en poids de frit de verre et en complément au moins un solvant et au moins un liant organique. Il s'agit avantageusement d'une encre de même type que celles habituellement utilisées pour la fabrication de cellules solaires.

De façon alternative, les lignes conductrices 4A et 4B peuvent être réalisées par une technique de dépôt de matériau conducteur, par exemple par électrodéposition, par un processus « electroless » de déposition, par pulvérisation cathodique ou « sputtering », par un procédé ALD (de l'anglais « Atomic Layer Déposition ») de dépôt de couches minces atomiques, par un procédé CVD (de l'anglais « Chemical Vapor Déposition ») de dépôt chimique en phase vapeur, jet d'encre (Ink-jet) etc..

Les lignes conductrices sont avantageusement à la fois fines et denses pour éviter de perturber le comportement du substrat lors de l'essai mécanique. Elles ont avantageusement les dimensions suivantes :

- une largeur comprise entre 20 et 200 $\mu$m, de préférence égale ou sensiblement égale à 50 $\mu$m ;
- une hauteur de l'ordre de 100 $\mu$m (toutefois la hauteur pourrait être différente, inférieure ou supérieure à 100 $\mu$m).

Les premières lignes conductrices 4A et les deuxièmes lignes conductrices 4B forment un maillage qui couvre au moins partiellement le substrat 1. Dans l'exemple décrit ici, le maillage couvre la totalité du substrat 1. En d'autres termes, en vue de dessus ou de dessous, les premières lignes 4A et les deuxièmes lignes 4B « s'entrecroisent » (toutefois sans contact entre elles puisque les premières lignes 4A et les deuxièmes lignes 4B sont respectivement portées par les deux faces $F_A$ et $F_B$ séparées par l'épaisseur du substrat 1). Dans l'exemple de réalisation décrit ici, les premières lignes conductrices 4A sont droites et parallèles entre elles. De même, les deuxièmes lignes conductrices 4B sont droites et parallèles entre elles. En outre, les premières lignes conductrices 4A sont orthogonales aux deuxièmes lignes conductrices 4B.

Le nombre N de lignes conductrices 4A (ou 4B) par face est fonction des dimensions du substrat et de la précision souhaitée pour la caractérisation de la fissure. Plus le nombre de lignes est élevé, meilleure est la précision de la caractérisation de la mesure. Dans l'exemple de réalisation décrit ici, le substrat 1 a une forme carrée de 156x156 mm (dimensions des côtés) et comprend 15 lignes conductrices par face, les lignes voisines étant espacées d'une distance d de 10 mm. Le nombre de lignes de la première face pourrait être différent de celui de la deuxième face. La distance séparant deux lignes voisines d'une même face peut par exemple être comprise entre 1 mm et 15 mm, avantageusement entre 2 mm et 10 mm.

Le substrat 1 est spécifiquement destiné à être utilisé par le système de caractérisation 100.

Le dispositif 5 d'acquisition de mesures est destiné à alimenter électriquement chacune des lignes conductrices 4A et 4B, l'une après l'autre et en boucle (ou de façon cyclique), et à mesurer une grandeur électrique pour chacune des lignes conductrices successivement alimentées. Les mesures sont réalisées avec une fréquence d'acquisition $f_a$. Cette fréquence d'acquisition $f_a$ est avantageusement suffisante pour détecter la propagation d'une fissure d'une ligne à l'autre (c'est-à-dire pour détecter une première ligne coupée lors d'une mesure puis une deuxième ligne coupée, voisine de la première, lors d'une mesure suivante) pour chacune des faces $F_A$ ($F_B$). En d'autres termes, la fréquence d'acquisition $f_a$ permet avantageusement de détecter, lors de la propagation d'une fissure à travers plusieurs lignes 4A (ou 4B) d'une face, la rupture de la conductivité électrique de chacune des lignes, de façon distincte et consécutive. A cet effet, $f_a$ est supérieure ou égale à une fréquence minimale qui est fonction d'une vitesse théorique maximale de propagation d'une fissure et de la distance entre lignes conductrices voisines. Posons d la distance entre deux lignes, exprimée en m (mètre), et V la vitesse de propagation d'une fissure, exprimée en m/s (mètre par seconde), alors la fréquence d'acquisition $f_a$ minimale, exprimée en Hz (Hertz), est égale à V/d :

$$f_{a\_min} = \frac{V}{d}.$$

Par exemple, supposons que la vitesse théorique maximale de propagation des fissures dans le silicium est égale à 50Km/s. Si les lignes conductrices sont espacées l'une de l'autre d'une distance de 2 mm, un laps de temps entre deux d'acquisitions successives de 40 nanosecondes au maximum est nécessaire, ce qui revient à une fréquence d'acquisition $f_a$ d'au moins 25 MHz. Si les lignes conductrices sont espacées l'une de l'autre d'une distance de 10 mm, la fréquence d'acquisition doit être d'au moins 5 MHz. D'une manière générale, la fréquence d'acquisition est comprise entre 10kHz et 100GHz. Avantageusement, elle est supérieure ou égale à 1 MHz. De préférence, la fréquence $f_a$ est supérieure ou égale à deux fois la fréquence minimale, voire supérieure ou égale à trois fois la fréquence minimale.

Le dispositif d'acquisition 5 comprend un dispositif 7 d'alimentation électrique des lignes conductrices 4A et 4B et un dispositif de mesure 8.

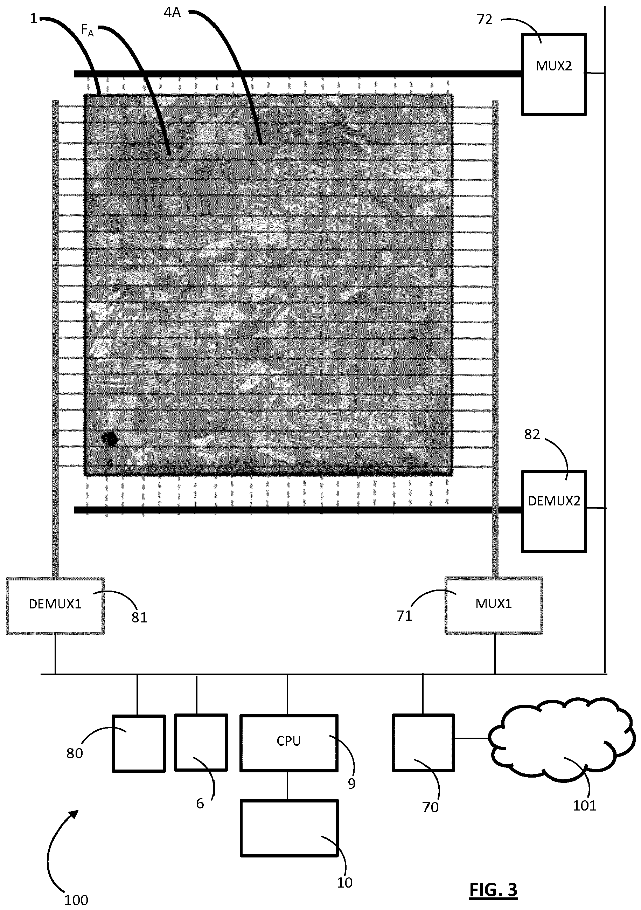

Le dispositif d'alimentation électrique 7 est destiné à alimenter électriquement chacune des lignes conductrices 4A, 4B, séparément, l'une après l'autre (c'est-à-dire de façon séquentielle ou asynchrone ou consécutive). Plusieurs lignes 4A, 4B ne doivent pas être alimentées en même temps, mais doivent l'être séparément, l'une après l'autre, car le substrat étant conducteur si au moins deux lignes 4A, 4B étaient alimentées simultanément, elles seraient en court-circuit. Dans l'exemple de réalisation décrit ici, en référence à la figure 3, le dispositif d'alimentation électrique 7 comprend les éléments suivants :

- un module d'alimentation électrique 70, relié ici à une source externe d'alimentation électrique 101, par exemple le réseau électrique ;
- un premier multiplexeur 71 « MUX1 » connecté en entrée au module d'alimentation électrique 70 et en sortie aux N premières lignes de la face $F_A$ et ;
- un deuxième multiplexeur 72 « MUX2 » connecté en entrée au module d'alimentation électrique 70 et en sortie aux N deuxièmes lignes de la face $F_B$.

Le module d'alimentation électrique 70 est destiné à appliquer par exemple une tension électrique continue $V_0$ de 5V aux lignes 4A, 4B successives, par l'intermédiaire du multiplexeur 71 (pour les lignes 4A) et du multiplexeur 72 (pour les lignes 4B). En variante, il pourrait y avoir deux modules d'alimentation électrique, l'un pour alimenter les lignes 4A de la première face et l'autre pour alimenter les lignes 4B de la deuxième face.

Dans une variante, le dispositif d'alimentation électrique 7 pourrait comprendre un seul multiplexeur relié en entrée à l'alimentation électrique et en sortie aux 2N lignes conductrices 4A, 4B. Dans une autre variante, le dispositif d'alimentation électrique des lignes pourrait comprendre plus de deux multiplexeurs pour relier toutes les lignes conductrices 4A, 4B à la source d'alimentation 101.

L'utilisation d'un ou plusieurs multiplexeur(s) interposé(s) entre l'alimentation électrique et les 2N lignes conductrices 4A, 4B permet de mutualiser la ou les alimentations électriques entre les lignes de chaque face ou des deux faces.

Dans l'exemple de réalisation décrit ici, le dispositif de mesure 8 comprend les éléments suivants :

- un instrument de mesure 80, en l'espèce un multimètre ;
- un premier démultiplexeur « DEMUX1 » 81 relié en entrée aux N premières lignes conductrices 4A et en sortie à l'instrument de mesure 80 ;
- un deuxième démultiplexeur « DEMUX2 » 82 relié en entrée aux N deuxièmes lignes conductrices 4B et en sortie à l'instrument de mesure 80.

L'instrument de mesure 80 est destiné à mesurer ici la tension électrique des lignes conductrices 4A, 4B par l'intermédiaire du démultiplexeur 81 (pour les lignes 4A) et du démultiplexeur 82 (pour les lignes 4B). La tension mesurée pour une ligne est par exemple la tension entre la ligne et la masse. En variante, on pourrait mesurer la tension aux bornes de cette ligne. L'instrument de mesure 80 est ici un voltmètre. Il peut mesurer le signal de tension électrique de chacune des lignes 4A, 4B l'une après l'autre. En variante, le signal de tension électrique de chacune des lignes 4A, 4B est mesuré de façon synchrone et simultanée avec l'application d'une tension électrique sur cette ligne par le module d'alimentation 70. Dans ce cas, l'instrument de mesure 80 mesure les tensions des lignes 4A, 4B successivement alimentées, l'une après l'autre, lorsque ces lignes sont alimentées.

Dans une variante, le dispositif de mesure 8 pourrait comprendre un seul démultiplexeur relié en entrée aux 2N lignes conductrices 4A, 4B et en sortie à l'instrument de mesure 80. Dans une autre variante, le dispositif de mesure 8 pourrait comprendre plus de deux démultiplexeurs pour relier toutes les lignes conductrices 4A, 4B à l'instrument de mesure 80.

L'utilisation de multiplexeurs(s) et de démultiplexeur(s) permet de mutualiser le module d'alimentation électrique et l'instrument de mesure entre les lignes pour alimenter électriquement et effectuer des mesures sur les 2N lignes. En variante, on pourrait utiliser deux modules d'alimentation et/ou deux instruments de mesure pour les deux faces respectivement.

Notons que, dans le cas où le substrat est en matériau isolant, il n'est pas nécessaire de multiplexer et de démultiplexer les signaux électriques car le matériau isolant évite tout risque de court-circuit.

Le module de traitement 6 est destiné à traiter, analyser les mesures réalisées et, à partir de ces mesures, à déterminer des informations de caractérisation d'une fissure générée dans le substrat de test 1 soumis à un essai de flexion quatre points. Ces informations de caractérisation comprennent l'une ou plusieurs des informations du groupe comportant un point d'origine de la fissure, une vitesse de propagation de la fissure et un trajet de propagation de la fissure.

Le système de caractérisation 100 comprend également une unité centrale de commande 9 comportant un processeur, ou CPU, à laquelle le dispositif d'alimentation 70, les multiplexeurs 71, 72, l'instrument de mesure 80, les démultiplexeurs 81, 82 et le module de traitement 6 sont reliés. La liaison entre le CPU et ces éléments s'effectue par des bus de connexion. L'unité centrale est destinée à commander le fonctionnement des éléments qui lui sont reliés, notamment à régler la fréquence d'acquisition $f_a$ des mesures.

Enfin, une interface utilisateur 10, dotée par exemple d'un écran, d'un clavier, d'une souris et d'une application d'interface utilisateur, permet à un utilisateur de saisir des données et/ou instructions et de restituer des données, notamment les données de caractérisation d'une fissure déterminées par le module de traitement

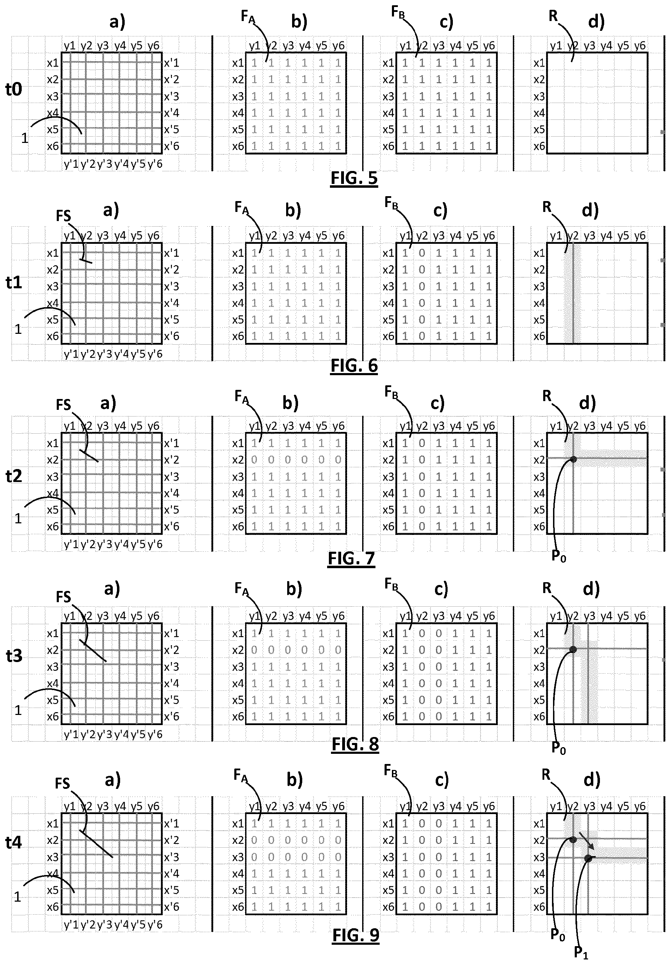

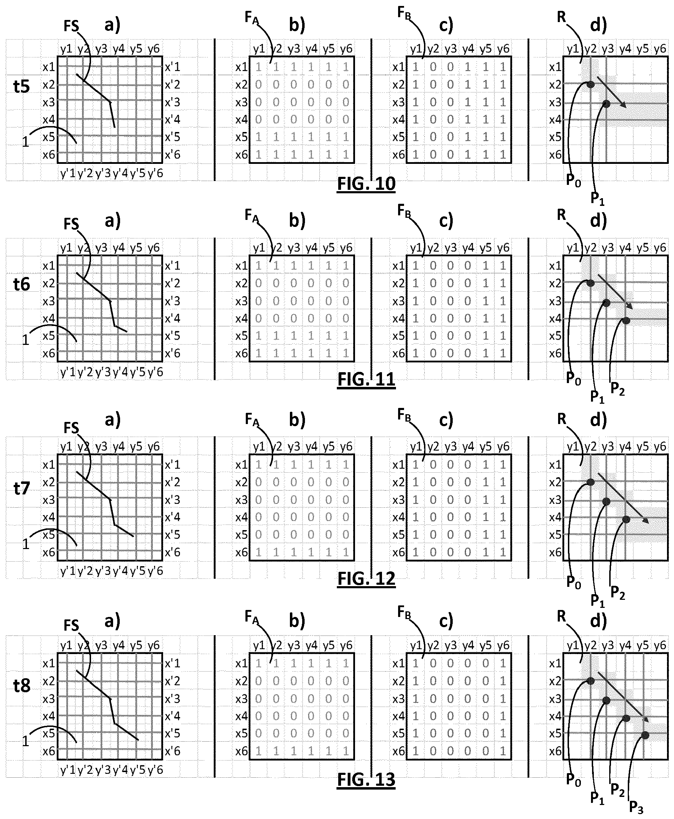

On va maintenant décrire le procédé de caractérisation d'une fissure générée dans le substrat de test 1, lorsque celui-ci est soumis à un essai mécanique de flexion quatre points, selon un exemple de réalisation en référence aux figures 5 à 13.

Lors d'une étape E0, on se munit d'un substrat de test 1, par exemple une plaquette de silicium, sur lequel N lignes conductrices, N étant égal à 6, droites et parallèles, sont sérigraphiées sur chacune des faces $F_A$, $F_B$. Les lignes de la face $F_A$ sont perpendiculaires à celles de l'autre face $F_B$. Les lignes de chaque face sont numérotées de 1 à 6. Chaque ligne d'indice n (avec $1 \leq n \leq 6$) de la face $F_A$ comporte un plot xn de connexion à l'alimentation électrique 70 par l'intermédiaire du multiplexeur 71 et un plot x'n de connexion à l'instrument de mesure 80 par l'intermédiaire du démultiplexeur 81. De façon analogue, chaque ligne d'indice n de la face $F_B$ comporte un plot yn de connexion à l'alimentation électrique 70 par l'intermédiaire du multiplexeur 72 et un plot y'n de connexion à l'instrument de mesure 80 par l'intermédiaire du démultiplexeur 82.

Initialement, toutes les lignes conductrices sont indemnes (c'est-à-dire non rompues, non endommagées).

Lors d'une étape E1, on connecte les lignes conductrices 4A de la face $F_A$ et les lignes conductrices 4B de la face $F_B$ au module d'alimentation électrique 70, par l'intermédiaire des plots de connexion entrants x1 à x6 et y1 à y6 qui sont reliés aux multiplexeurs 71 et 72 respectivement.

Lors d'une étape E2, on connecte les lignes conductrices 4A de la face $F_A$ et les lignes conductrices 4B de la face $F_B$ à l'instrument de mesure 80, par l'intermédiaire des plots de connexion x'1 à x'6 et y'1 à y'6 qui sont reliés aux démultiplexeurs 81 et 82 respectivement.

Lors d'une étape E3, le dispositif d'alimentation 7 applique une tension d'alimentation électrique $V_0$, par exemple de 5V, successivement à chacune des lignes 4A et 4B, en réitérant l'opération de façon cyclique, en boucle. Chaque ligne est l'une après l'autre et de façon cyclique soumise à la tension $V_0$. Autrement dit, la tension $V_0$ est appliquée successivement aux plots de connexion x1 à x6 de la face $F_A$ puis y1 à y6 de la face $F_B$,

puis cette opération est répétée de façon cyclique. Cette étape E3 est mise en oeuvre par le dispositif d'alimentation électrique 7 sous la commande de l'unité centrale de commande 9. Celle-ci pilote notamment les multiplexeurs et la fréquence à laquelle la tension appliquée $V_0$ passe d'une ligne à l'autre, cette fréquence définissant la fréquence d'acquisition $f_a$.

Parallèlement à l'étape d'alimentation E3, une étape de mesure E4 est mise en oeuvre. Lors de cette étape E4, le dispositif de mesure 8 mesure la tension en sortie des lignes conductrices, au niveau des plots de connexion sortants x'1 à x'6 pour la face $F_A$ et y'1 à y'6 pour la face $F_B$. La tension est ici mesurée ligne par ligne, de façon concomitante à l'application de la tension $V_0$ sur la ligne. Ainsi l'application de la tension $V_0$ sur chaque ligne et la mesure de la tension sur cette ligne sont synchronisées.

Le procédé comprend une étape d'essai de flexion quatre points E5. Cette étape E5 est réalisée concomitamment à la mise en oeuvre des étapes d'alimentation E3 et de mesure E4. Initialement, la plaquette de test 1 est indemne (sans fissure). Durant l'essai de flexion, la déformation appliquée provoque une fissure qui se propage dans la plaquette 1. Notons que les barres appliquant la déformation au substrat lors de l'essai de flexion sont évidemment adaptées pour éviter un court-circuit entre les différentes lignes déposées à la surface du substrat.

Lors d'une étape E6, mise en oeuvre durant l'essai de flexion E5, le module de traitement 6 analyse les mesures réalisées par le dispositif de mesure 8 et, à partir de ces mesures, détermine des informations ou données de caractérisation de la fissure, c'est-à-dire relatives à la fissure, générée dans le substrat de test 1 en matériau semi-conducteur soumis à une sollicitation mécanique.

Les figures 5 à 13 représentent les différents aspects ou éléments suivants, référencés a), b), c) et d), relatifs à la plaquette de test 1, à différents instants successifs durant l'essai de flexion E5 :

a) la plaquette de test 1 supportant, sur la face $F_A$, N lignes conductrices xnx'n horizontales et, sur la face $F_B$, N lignes conductrices verticales yny'n, avec ici N=6 et $1 \leq n \leq 6$ ;
b) les signaux de tension mesurés sur les N lignes horizontales xnx'n ici représentés par des valeurs égales à 1 ou 0, la valeur 1 correspondant à une tension $V_0$ et la valeur 0 correspondant à une tension nulle,
c) les signaux de tension mesurés sur les N lignes verticales yny'n ici représentés par des valeurs égales à 1 ou 0, la valeur 1 correspondant à une tension $V_0$ et la valeur 0 correspondant à une tension nulle,
d) une représentation « R » de la plaquette de test contenant, le cas échéant, un point d'origine $P_0$ et un trajet de propagation d'une fissure « FS » qui sont déterminés à partir des valeurs représentatives des signaux de tension mesurés sur les différentes lignes, déterminée par le module de traitement 6.

Initialement, en référence à la figure 5, à un instant t0 de début du test de flexion, la plaquette de test 1 est intacte (sans fissure). La tension mesurée sur chaque ligne conductrice horizontale xnx'n est égale à $V_0$. De même, la tension mesurée sur chaque ligne conductrice verticale yny'n est égale à $V_0$. Ainsi, toutes les valeurs représentatives des tensions mesurées sur les lignes xnx'n et yny'n valent 1, comme représenté sur les figures 5b) et 5c). Sur la figure 5d), la représentation de la plaquette de test 1 déterminée par le module de traitement 6 est sans zone de fissure.

A un instant suivant t1, un début de fissure FS apparaît à partir d'un point d'origine dans la plaquette de test 1. Ce début de fissure FS traverse la ligne verticale y2y'2 et par conséquent interrompt celle-ci. La tension mesurée V sur cette ligne y2y'2 devient donc nulle. La tension mesurée V sur chaque ligne conductrice horizontale xnx'n demeure égale à $V_0$, de sorte que toutes les valeurs représentatives des tensions mesurées sur les lignes xnx'n valent 1, comme représenté sur la figure 6b). La tension mesurée sur chaque ligne conductrice verticale yny'n est égale à $V_0$, à l'exception de la ligne y2y'2, demeure également nulle. Ainsi, sur la figure 6c), les lignes verticales yny'n contiennent des valeurs égales à 1 sauf la ligne y2y'2 qui contient des valeurs égales à 0. Sur la figure 6d), la représentation de la plaquette de test 1 telle que déterminée par le module de traitement 6 contient une zone de fissure s'étendant le long de la ligne y2y'2.

A un instant suivant t2, la fissure FS s'est légèrement agrandie par rapport à l'instant t1 et coupe la ligne horizontale x2x'2 et la ligne verticale y2y'2, les autres lignes demeurant intactes. Ainsi, sur la figure 7b), les lignes horizontales xnx'n contiennent des valeurs de tension égales à 1, à l'exception de la ligne x2x'2 qui contient des valeurs de tension égales à 0. Sur la figure 7c), les lignes verticales yny'n contiennent des valeurs de tension égales à 1, à l'exception de la ligne y2y'2 qui contient des valeurs de tension égales à 0. Sur la figure 7d), $P_0$ représente le point d'intersection de ce premier couple de lignes, horizontale et verticale, x2x'2 et y2y'2 coupées l'une juste après l'autre par la fissure. Il constitue un point d'origine de la fissure tel que déterminé par le module de traitement 6.

Aux instants suivants t3 à t8, la fissure FS continue de se propager et coupe successivement les lignes conductrices suivantes : y3y'3, x3x'3, x4x'4, y4y'4, x5x'5, y5y'5. Les valeurs de tension mesurées sur ces lignes successives passent de 1 (avant coupure) à 0 (après coupure). Les couples de lignes verticale et horizontale qui sont coupées l'une juste l'autre par la fissure définissent des points d'intersection $P_i$ (avec i allant ici de 0 à 3) qui constituent des points de la trajectoire de la fissure FS telle que déterminée par le module de traitement 6.

Lors de l'étape E6, le module de traitement 6 détermine un point d'origine de la fissure FS, une trajectoire de la fissure FS, passant par les points $P_i$ successivement déterminés (ici $P_0$-$P_1$-$P_2$-$P_3$) et une vitesse de propagation de la fissure FS, à partir des mesures réalisées lors de l'étape E4, parallèlement à l'alimentation consécutive et cyclique des lignes conductrices xnx'n et yny'n.

Dans la description qui précède, on alimente les lignes à l'aide d'un générateur de tension. En variante, on pourrait les alimenter avec un générateur de courant. De même, au lieu de mesurer une tension électrique sur les lignes, on pourrait mesurer un courant électrique.

Au lieu de porter des lignes conductrices sur ses deux faces, le substrat pourrait porter des lignes conductrices, non sécantes entre elles, sur l'une seules des deux faces, dite « face de test ». Dans ce cas, le dispositif d'acquisition de mesures alimente électriquement chacune des lignes conductrices de la face de test du substrat, l'une après l'autre et en boucle, et mesure une tension électrique pour chacune de ces lignes conductrices successivement alimentées avec une fréquence d'acquisition $f_a$ suffisante pour détecter la propagation d'une fissure d'une ligne à l'autre. Le module de traitement 6 détermine une ou plusieurs informations de caractérisation de la fissure (FS) à partir de ces mesures, telles qu'une zone d'origine de la fissure, une vitesse de propagation de la fissure et un trajet de propagation de la fissure. Ce mode de réalisation de réalisation de l'invention est plus simple à mettre en oeuvre mais procure des informations de caractérisation de la fissure un peu moins précises.

Dans toutes les variantes ou formes de réalisation, le système de caractérisation ou le procédé de caractérisation permet de déterminer, non seulement des informations d'état de fissuration du substrat, mais aussi des informations de dynamique de la fissuration du substrat.

Dans toutes les variantes ou formes de réalisation, de préférence, on réalise un échantillonnage numérique de la grandeur électrique. Ainsi, dans toutes les variantes ou formes de réalisation, de préférence, le système de caractérisation comprend un dispositif d'échantillonnage numérique de la grandeur électrique.

## Revendications

1. Système de caractérisation d'une fissure générée dans un substrat (1) soumis à une sollicitation mécanique, comprenant un substrat (1) portant, sur au moins une première face ($F_A$), des lignes conductrices (4A) non sécantes entre elles, un dispositif (5) d'acquisition de mesures destiné à alimenter électriquement chacune des lignes conductrices, l'une après l'autre et en boucle, et à mesurer une grandeur électrique pour chacune des lignes conductrices successivement alimentées avec une fréquence d'acquisition ($f_a$) suffisante pour détecter la propagation d'une fissure d'une ligne à l'autre, et un module de traitement (6) destiné à déterminer au moins une information de caractérisation de la fissure (FS) à partir des mesures, du groupe comportant une origine de la fissure, une vitesse de propagation de la fissure et un trajet de propagation de la fissure.

2. Système selon la revendication précédente, **caractérisé en ce que** le substrat (1) porte, sur une deuxième face ($F_B$), des lignes conductrices (4B) non sécantes entre elles, les lignes conductrices (4B) de la première face ($F_A$) et les lignes conductrices (4A) de la deuxième face ($F_B$) formant un maillage couvrant au moins partiellement le substrat (1), avantageusement la totalité du substrat (1).

3. Système selon l'une des revendications précédentes, **caractérisé en ce que** la fréquence d'acquisition ($f_a$) est supérieure ou égale à 1 MHz.

4. Système selon l'une des revendications précédentes, **caractérisé en ce que** les lignes conductrices (4A, 4B) portées par une même face ($F_A$, $F_B$) du substrat (1) sont parallèles entre elles.

5. Système selon la revendication précédente, **caractérisé en ce que** les lignes conductrices (4A, 4B) portées par une même face ($F_A$, $F_B$) du substrat (1) sont droites.

6. Système selon l'une des revendications précédentes, **caractérisé en ce que** les lignes conductrices (4A) de la première face ($F_A$) sont orthogonales aux lignes conductrices (4B) de la deuxième face ($F_B$).

7. Système selon l'une des revendications précédentes, **caractérisé en ce que** le dispositif d'acquisition (5) comporte au moins un multiplexeur (71, 72) interposé entre un module d'alimentation électrique (70) et les lignes conductrices (4A, 4B), avantageusement un premier multiplexeur entre le dispositif d'alimentation électrique et les lignes (4A) de la première face ($F_A$) et un deuxième multiplexeur entre le dispositif d'alimentation électrique et les lignes (4B) de la deuxième face ($F_B$).

8. Système selon l'une des revendications précédentes, **caractérisé en ce que** le dispositif d'acquisition (5) comporte un instrument de mesure (80) de ladite grandeur électrique et au moins un démultiplexeur entre les lignes conductrices (4A, 4B) et l'instrument de mesure (80), avantageusement un premier démultiplexeur entre les lignes conductrices (4A) de la première face ($F_A$) et l'instrument de mesure et un deuxième démultiplexeur entre les lignes conductrices (4B) de la deuxième face ($F_B$) et l'instrument de mesure.

9. Système selon l'une des revendications précédentes, **caractérisé en ce que** la distance séparant deux lignes conductrices voisines (4A ; 4B) d'une même face est comprise entre 1 mm et 15 mm, avantageusement entre 2 mm et 10 mm.

10. Système selon l'une des revendications précédentes, **caractérisé en ce que** le substrat (1) comprend l'un au moins des matériaux du groupe comportant un matériau semi-conducteur, un matériau isolant, un matériau fragile, un matériau semi-fragile.

11. Système selon l'une des revendications précédentes, **caractérisé en ce que** le substrat (1) comporte une première face ($F_A$) portant des lignes conductrices (4A) non sécantes entre elles, chaque ligne conductrice comportant, à l'une de ses extrémités, un connecteur de liaison à un dispositif d'alimentation électrique et, à son autre extrémité, un connecteur de liaison à un dispositif de mesure d'une grandeur électrique.

12. Système selon l'une des revendications précédentes, **caractérisé en ce que** la fréquence d'acquisition ($f_a$) est supérieure ou égale à une fréquence minimale (f) telle que

$$f = V / d$$

avec :

V : la vitesse de propagation théorique maximale d'une fissure dans le substrat ;
d : la distance entre deux lignes conductrices voisines ou adjacentes, notamment la fréquence d'acquisition ($f_a$) est supérieure ou égale à deux fois, voire supérieure ou égale à trois fois la fréquence minimale (f).

13. Procédé de caractérisation d'une fissure générée dans un substrat soumis à une sollicitation mécanique, comprenant les étapes de :

• se munir d'un substrat de test portant, au moins sur une première face, des lignes conductrices non sécantes entre elles,
• acquérir des mesures en alimentant électriquement chacune des lignes conductrices, l'une après l'autre et en boucle, et en mesurant une grandeur électrique dans chacune des lignes conductrices successivement alimentées, avec une fréquence d'acquisition supérieure ou égale à une fréquence minimale fonction d'une vitesse théorique maximale de propagation d'une fissure et d'une distance entre lignes conductrices voisines ;
• déterminer au moins une information de caractérisation de la fissure à partir des mesures, notamment au moins l'une des informations du groupe comportant une origine de la fissure, une vitesse de propagation de la fissure et un trajet de propagation de la fissure.

**14.** Procédé selon la revendication précédente, **caractérisé en ce que** la fréquence d'acquisition est supérieure ou égale à 1 MHz.

**15.** Procédé selon la revendication 13 ou 14, **caractérisé en ce que** la fréquence minimale (f) est telle que

$$f = V / d$$

avec :

V : la vitesse de propagation théorique maximale d'une fissure dans le substrat ;
d : la distance entre deux lignes conductrices voisines ou adjacentes.

**FIG. 1**

**FIG. 2A**

**FIG. 2B**

**FIG. 3**

**FIG. 4**

**FIG. 5**

t0

a)

b) $F_A$

c) $F_B$

d) R

**FIG. 6**

t1

FS a)

b) $F_A$

c) $F_B$

d) R

**FIG. 7**

t2

FS a)

b) $F_A$

c) $F_B$

d) R — $P_0$

**FIG. 8**

t3

FS a)

b) $F_A$

c) $F_B$

d) R — $P_0$

**FIG. 9**

t4

FS a)

b) $F_A$

c) $F_B$

d) R — $P_0$, $P_1$

FIG. 10

FIG. 11

FIG. 12

FIG. 13

PLQ TEST — E0

CONNECT $F_A$ — E1

CONNECT $F_B$ — E2

ALIM $V_0$ — E3

E5 — FLEX

MES V — E4

E6 — DET CARACT FS

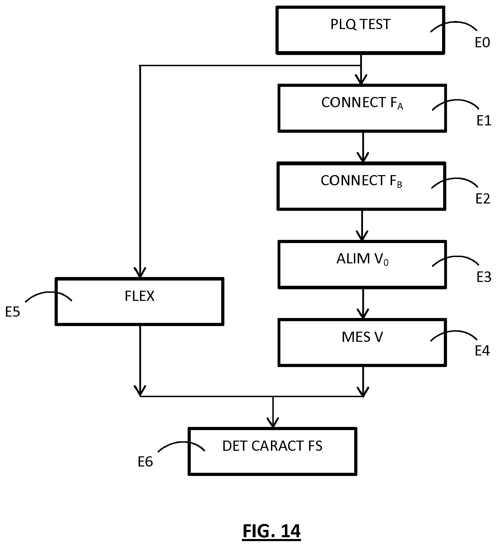

**FIG. 14**

**Europäisches Patentamt**

**European Patent Office**

**Office européen des brevets**

## RAPPORT DE RECHERCHE EUROPEENNE

Numéro de la demande

EP 17 17 3812

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (IPC) |
| X | GB 970 403 A (CESKOSLOVENSKA AKADEMIE VED) 23 septembre 1964 (1964-09-23) * le document en entier * ----- | 1,3-9, 11-15 | INV. $G01N27/20$ |
| X | US 2016/077033 A1 (GOTTMANN MATTHIAS [US] ET AL) 17 mars 2016 (2016-03-17) * le document en entier * ----- | 1-3,6, 9-13,15 | |
| X | WO 2008/149445 A1 (FUJITSU LTD [JP]; FUKUDA TAKASHI [JP]) 11 décembre 2008 (2008-12-11) * le document en entier * ----- | 1,3,13, 14 | |

| DOMAINES TECHNIQUES RECHERCHES (IPC) |
|---|
| $G01N$ |

Le présent rapport a été établi pour toutes les revendications

| Lieu de la recherche | Date d'achèvement de la recherche | Examinateur |
|---|---|---|
| Munich | 17 juillet 2017 | De Masi, Rita |

**ANNEXE AU RAPPORT DE RECHERCHE EUROPEENNE
RELATIF A LA DEMANDE DE BREVET EUROPEEN NO.**

EP 17 17 3812

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-07-2017

| Document brevet cité au rapport de recherche | | Date de publication | Membre(s) de la famille de brevet(s) | | Date de publication |
|---|---|---|---|---|---|
| GB 970403 | A | 23-09-1964 | BE | 608211 A1 | 02-01-1962 |
| | | | DE | 1171174 B | 27-05-1964 |
| | | | FR | 1450365 A | 24-06-1966 |
| | | | GB | 970403 A | 23-09-1964 |
| US 2016077033 | A1 | 17-03-2016 | US | 2013069663 A1 | 21-03-2013 |
| | | | US | 2016077033 A1 | 17-03-2016 |
| WO 2008149445 | A1 | 11-12-2008 | AUCUN | | |

Pour tout renseignement concernant cette annexe : voir Journal Officiel de l'Office européen des brevets, No.12/82

EPO FORM P0460